# EUROPÄISCHE PATENTSCHRIFT

(11) **EP 1 913 302 B1**
(45) Veröffentlichungstag und Bekanntmachung des Hinweises auf die Patenterteilung: **24.04.2013**
(21) Anmeldenummer: 06762673.9
(22) Anmeldetag: 19.07.2006
(51) Int. Cl.: G02B 6/00, B60Q 1/30

(54) **LEUCHTE FÜR KRAFTFAHRZEUGE**
LIGHT FOR MOTOR VEHICLES
FEU POUR VEHICULES AUTOMOBILES

(30) Priorität: 12.08.2005 DE 102005038154
(43) Veröffentlichungstag der Anmeldung: 23.04.2008
(73) Patentinhaber: Bayerische Motoren Werke Aktiengesellschaft, 80809 München (DE)
(72) Erfinder: BEFELEIN, Carsten, 85540 Haar (DE); ENDERS, Martin, 81545 München (DE)
(74) Vertreter: Mayer-Martin, Christian
(86) Internationale Anmeldenummer: PCT/EP2006/007069
(87) Internationale Veröffentlichungsnummer: WO 2007/019934

(56) Entgegenhaltungen:
- EP-A- 0 940 331
- DE-A1- 10 200 359
- DE-A1- 10 332 977
- US-A1- 2001 048 601
- US-A1- 2002 149 946
- US-A1- 2003 193 815
- US-B1- 6 789 929

## Beschreibung

Die Erfindung betrifft eine Leuchte für Kraftfahrzeuge, insbesondere eine zusätzliche Bremsleuchte, im Wesentlichen bestehend aus einer stabförmigen Lichtleiteranordnung mit wenigstens zwei in ihrer Längsrichtung hintereinander angeordneten Lichtleiterarmen, zwischen denen mindestens eine Lichtquelle angeordnet ist, deren Licht stirnseitig in die Lichtleiterarme einkoppelbar und quer zu ihrer Längsrichtung über eine gegenüber einer reflektierenden Fläche liegenden Lichtaustrittsfläche abstrahlbar ist.

Leuchten für Kraftfahrzeuge mit stabförmigen Lichtleiteranordnungen werden insbesondere für zusätzliche Bremsleuchten verwendet, die mittig am Fahrzeugheck oder an einer Heckscheibe angeordnet sind. Diese Bremsleuchten werden auch als dritte Bremsleuchte oder hochgesetzte Bremsleuchte, kurz HBL, bezeichnet.

Bei bekannten hochgesetzten Bremsleuchten, wie sie beispielsweise in der DE 198 04 440 A1 und der DE 100 29 542 A1 beschrieben sind, ist an den Enden eines stabförmigen Lichtleiters jeweils eine punktförmig abstrahlende Lichtquelle, vorzugsweise eine LED, angeordnet, die ihr Licht stirnseitig in den Lichtleiter einkoppelt. Am Umfang des Lichtleiters ist gegenüber einer Lichtaustrittsfläche eine reflektierende Fläche angeordnet. Die reflektierende Fläche weist eine Vielzahl von Prismen auf, die das einfallende Licht reflektieren, wodurch in der Folge an der Lichtaustrittfläche eine gleichmäßige Ausleuchtung der abstrahlenden Fläche erzielt wird. Die Prismierung kann auch, wie in der DE 100 29 542 A1 beschrieben, in Wirkverbindung mit einer entsprechend geformten Lichtaustrittfläche, zusätztich die Funktion eines Rückstrahlers übernehmen, der von außen auf die Bremsleuchte auftreffendes Licht zurückwirft.

Derartige Bremsleuchten benötigen zur Erzielung einer gleichmäßigen Ausleuchtung über ihre gesamte Länge sowie zur Einhaltung der gesetzlich geforderten Lichtwerte und Lichtftächen relativ lichtstarke LEDs. Insbesondere beim Innenanbau an der Heckscheibe und bei größeren Gesamtlängen (mehr als 50 cm) des Prismenstabes steigt der Aufwand erheblich.

Aus der DE 20 2004 016 669 U1 ist eine hochgesetzte Bremsleuchte bekannt, die zwei in Längsrichtung hintereinander angeordnete stabförmige Lichtleiter aufweist, zwischen denen wenigstens eine, vorzugsweise zwei Lichtquellen angeordnet sind, die ihr Licht stirnseitig in den jeweils benachbarten Lichtleiter einkoppeln. Zwischen den Lichtleitern ist eine Öffnung zur Aufnahme einer Spritzdüse einer Heckscheibenwaschanlage vorgesehen. Außerdem ist jedem Lichtleiter ein Kühlkörper zugeordnet, der mit einer Leiterplatte thermisch kontaktiert ist, die die Lichtquelle(n) des jeweiligen Lichtleiters trägt (tragen).

Die DE 103 32 977 wird als nächst liegender Stand der Technik angesehen und offenbart eine Fahrzeugleuchte mit zwei Lichtleiterarmen, welche sich seitlich zu beiden Seiten einer Lichtquelle erstrecken.

Nachteilig bei der bekannten Bremsleuchte sind die in Konstruktion und Kosten relativ aufwendigen Kühlkörper, die zur Kühlung der Leiterplatten, bzw. der Lichtquellen vorgesehen sind. Durch die zwei Leiterplatten und zwei Kühlkörper wird außer dem damit verbundenen Konstruktions- und Kostenaufwand auch zusätzlicher Bauraum und zusätzliches Gewicht für die Bremsleuchte beansprucht. Zudem entsteht konstruktionsbedingt in einem Mittelteil im Bereich der Spritzdüsenöffnung eine Lücke in der Bremslichtabstrahlung. Dies kann sich auf den optischen Eindruck der Leuchte ungünstig auswirken und ist daher eher nur für spezielle Bremsleuchten geeignet, bei denen eine derartige Ausnehmung vorgegeben ist.

Aufgabe der vorliegenden Erfindung ist es daher, eine Leuchte für Kraftfahrzeuge mit einer stabförmigen Lichtleiteranordnung, insbesondere zur Verwendung als eine hochgesetzte Bremsleuchte, zu schaffen, die bei einer relativ großen Baulänge eine gleichmäßige Ausleuchtung gewährleistet und dennoch kostengünstig sowie konstruktiv einfach und bauraumsparend ist.

Diese Aufgabe wird in Verbindung mit dem Oberbegriff des Anspruches 1 dadurch gelöst, dass in einem Zentralbereich zwischen den Lichtleiterarmen eine in der Längsrichtung der Lichtleiteranordnung ausgerichtete Reihe von mehr als zwei Lichtquellen auf einer elektronischen Trägerplatte angeordnet ist, bei der das Licht der beiden äußeren Lichtquellen in die jeweiligen Stirnseiten der benachbarten Lichtleiterarme einkoppelbar ist, und bei der das Licht wenigstens einer dazwischen liegenden Lichtquelle direkt in Richtung der Lichtaustrittsfläche abstrahlbar ist.

Durch die erfindungsgemäße Anordnung wird vorteilhaft erreicht, dass bei einer Verwendung kostengünstiger Lichtquellen und Lichtleiter eine hochgesetzte Bremsleuchte ermöglicht wird, die sich problemlos bis über die gesamte Fahrzeugbreite erstrecken kann und sowohl für den Außen- als auch für den Innenanbau am Fahrzeugheck verwendbar ist.

Von dem zentralen Bereich geht eine direkte Abstrahlung in Richtung der Lichtaustrittsfläche aus. Seitlich davon sind zwei Lichtleiterarme, die entsprechend kürzer ausfallen können, angeordnet. Zur Speisung der kürzeren Lichtleiterarme genügen herkömmliche Lichtquellen, die keine speziellen Kühlmaßnahmen, insbesondere keine speziellen Kühlkörper oder aufwendige elektronische Ansteuerungen benötigen, um eine ausreichend starke und homogene Ausleuchtung an der Lichtaustrittfläche, auch bei einem Innenanbau an der Heckscheibe, zu erzeugen. Für die Lichtleiterarme können Lichtleitkörper aus Prismenstäben verwendet werden, wie sie am Markt bereits erhältlich sind. Diese weisen an einer Längsseite eine durch Prismenelemente gebildete reflektierende Fläche auf, an der das eingekoppelte Licht vielfach reflektiert wird. Dadurch wird eine homogene Abstrahlung in eine Vorzugsrichtung, d.h. in Richtung der Lichtaustrittsfläche erzeugt. Die gegenüber der Prismenfläche liegende Lichtaustrittsfläche kann beispielsweise als eine vom optischen Eindruck her vorteilhafte klare glatte Fläche ausgebildet sein kann. Selbstverständlich sind auch eingefärbte und/oder strukturierte Oberflächen möglich. Auch kann der Lichtaustrittsfläche eine entsprechende Abdeckscheibe vorgelagert sein.

Der Trägerplatte kann, wie bei einer bevorzugten Ausführungsform der Erfindung vorgesehen, in Richtung der Lichtaustrittsfläche ein optisches Element vorgelagert sein, die von der direkten Abstrahlung durchstrahlt wird. Diese Optik kann beispielsweise ein Lichtleiter sein, der in seinen optischen Eigenschaften den seitlichen Lichtleiterarmen angepasst ist. Dadurch wird auf einfache Weise eine über die gesamte Länge der Lichtleiteranordnung besonders gleichmäßig erscheinende Abstrahlung erreicht. Die Lichtleiterarme können Teil eines Lichtleiters sein, der im zentralen Bereich der Trägerplatte entsprechend ausgeschnitten bzw. geformt ist. Auch weitere zusätzliche Sekundäroptiken sind möglich. Es ist jedoch auch denkbar, dass die Trägerpatte mit den darauf verschalteten Lichtquellen lediglich mit einer, in der Ebene der Lichtaustrittsfläche bzw. der Abdeckung der Lichtleiterarme angeordneten Abdeckscheibe ohne ein weiteres optisches Element abgedeckt ist. Im Falle einer klaren Abdeckscheibe wird dadurch ein direkter Blick auf die abstrahlenden Lichtquellen ermöglicht, was zur Erzielung bestimmter optischer Effekte erwünscht sein kann.

Als Lichtquellen sind herkömmliche Lumineszenzdioden im sichtbaren Wellenlängenbereich, d.h. LEDs (Light Emitting Diode), besonders geeignet. Diese stehen in jeder gewünschten Abstrahlungsfarbe (Wellenlänge im Sichtbaren), insbesondere auch im für Bremsleuchten relevanten roten Farbspektrum, kostengünstig zur Verfügung. Sie sind zudem besonders langlebig und als kompakte Bauelemente auf einer Leiterplatte (Platine), die als elektronische Trägerplatte besonders geeignet ist, einfach zu kontaktieren und zu verschalten. Als Leiterplatte kann ein in einer flexiblen Leiterplattentechnologie hergestelltes Bauteil vorgesehen sein, beispielsweise eine Basis aus einer Polymerfolie mit einer hochduktilen Kupferauflage. Dadurch lässt sich die Lichtleiteranordnung besonders leicht an eine vorgegebene Geometrie bei der Montage am Einbauort anpassen.

Bei einer weiteren bevorzugten Ausführungsform der Erfindung weisen die äußeren Lichtquellen, d.h. diejenigen, deren Licht in die Lichtleiterarme eingekoppelt wird und die inneren Lichtquellen, d.h. diejenigen die direkt abstrahlen, unterschiedliche Lichtstärken auf. Durch eine geeignete Auswahl der Lichtstärken kann eine besonders homogene Abstrahlung der Leuchte erreicht werden, Insbesondere ist es dadurch möglich, bei der stirnseitigen Einkopplung ggf. auftretende Verluste sowie eine durch mehrere direkt abstrahlende LEDs höhere Leuchtdichte im zentralen Abstrahtungsbereich auf einfache Weise, insbesondere ohne aufwendige elektronische Steuerungsmittel, zu kompensieren.

Nach einer weiteren bevorzugten Ausführungsform der Erfindung ist die Lichtleiteranordnung einstückig ausgebildet. Die elektronische Trägerplatte kann als ein Kunststoff-Einspritzteil ausgebildet sein. Durch den einteiligen Lichtleiter kann eine durchgehende glatte Lichtaustrittsfläche verwendet werden, die optisch besonders günstig ist. Zudem entsteht ein besonders montagefreundliches kompaktes Bauteil.

Für den Außenanbau ist ein einteiliges Bauteil, bei dem die Trägerplatte durch ein an sich bekanntes Kunststoffspritzverfahren als Einspritzteil mit den Lichtleiterarmen verbunden ist, besonders geeignet, da aufwendige Abdichtungen eingespart werden können. Es kann jedoch auch eine besonders flexible und an verschiedene Fahrzeugmodelle kostengünstig anpassbare Lichtleiteranordnung in einer Modulbauweise vorgesehen sein, bei der die einzelnen Module (Lichtleiterarme, Trägerplatte) über Rast- oder Steckverbindungen lösbar miteinander verbindbar sind.

Die Längen der Lichtleiterarme sowie des durch die Trägerplatte bestimmten zentralen Abstrahlungsbereichs können beliebig variiert werden, um eine gewünschte Abstrahlungsfläche, bzw. -länge sowie eine gewünschte Abstrahlungscharakteristik zu erreichen. Dabei ist es grundsätzlich auch denkbar, dass, wie bei einer weiteren bevorzugten Ausführungsform der Erfindung vorgesehen, die Lichtleiteranordnung drei oder mehr Lichtleiterarme mit jeweils dazwischen angeordneten, vorteilhaft miteinander verschalteten, Trägerplatten aufweist, die jeweils eine Mehrzahl von Lichtquellen tragen, bei denen das Licht der jeweils äußeren Lichtquellen in die jeweils benachbaren Stirnflächen der entsprechenden Lichtleiterarme einkoppelbar ist. Dadurch ist es möglich, die Lichtleistung der Leuchte bei Verwendung kostengünstiger LEDs hoch weiter zusteigem und somit die Anwendungsmöglichkeiten der Leuchte nochmals zu erweitern.

Weitere Einzelheiten der Erfindung ergeben sich aus der nachfolgenden ausführlichen Beschreibung und der beigefügten Zeichnung, in der eine bevorzugte Ausführungsform der Erfindung beispielhaft veranschaulicht ist.

In der Zeichnung zeigt:

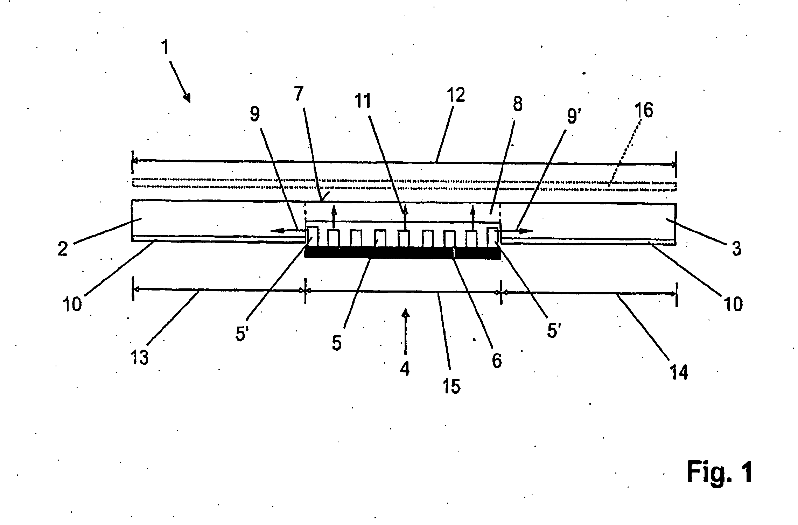

- Figur 1:: Eine vereinfachte Darstellung einer erfindungsgemäßen Leuchte in einem Längsschnitt.

Eine Leuchte für Kraftfahrzeuge besteht im Wesentlichen aus einer stabförmigen Lichtleiteranordnung 1 mit zwei in ihrer Längsrichtung hintereinander angeordneten Lichtleiterarmen 2, 3, zwischen denen in einem Zentralbereich 4 eine in der Längsrichtung der Lichtleiteranordnung 1 ausgerichtete Reihe von mehreren Lichtquellen 5, 5' auf einer elektronischen Trägerplatte 6 angeordnet ist.

Fig. 1 zeigt eine als eine hochgesetzte Bremsleuchte ausgebildete Leuchte, die eine Länge 12 aufweist, die sich bis über eine gesamte Fahrzeug- bzw. Heckbreite eines (nicht dargestellten) Fahrzeuges erstrecken kann. Die Gesamtlänge 12 ergibt sich dabei aus den Längen 13, 14, 15 der Einzelbauteile 2, 3, 6.

Die Lichtleiterarme 2, 3 sind als stabförmige Lichtleitkörper ausgebildet, an deren Unterseiten in an sich bekannter Weise reflektierenden Flächen 10; ausgebildet sind, die jeweils eine Vielzahl von Prismenelementen aufweisen. Zwischen den Lichtleiterarmen 2, 3 befindet sich die Trägerplatte 6. Diese ist vorteilhaft als eine flexible Leiterplatte ausgebildet, auf der die vorteilhaft als LEDs ausgebildeten Lichtquellen 5, 5' kontaktiert sind. Die beiden äußeren LEDs 5' sind in eine Richtung 9, 9' ausgerichtet, sodass ihr Licht stirnseitig in die Lichtleiter 2, 3 eingekoppelt wird. Durch die Prismierung 10 dieser Lichtleiterarme 2, 3 wird der größte Teil des eingekoppelten Lichtes in einer Vorzugsrichtung 11, die die Hauptabstrahlungsrichtung der Lichtleiteranordnung 1 ist, nach einer Vielfachreflexion, als diffuse Abstrahlung aus einer Lichtaustrittsfläche 7 ausgekoppelt. Die gegenüber der Prismierung 10 liegende Lichtaustrittsfläche 7 ist vorteilhaft als eine glatte klare Abschlussfläche ausgebildet, die sich ein- oder mehrteilig über die gesamte Länge 12 der Lichtleiteranordhung 1 erstreckt. Der Lichtleiteranordnung kann eine Abdeckscheibe 16 vorgelagert werden.

Im Zentralbereich 4 der Trägerplatte 6 sind mehrere LEDs 5 kontaktiert, die ihr Licht direkt in der Hauptabstrahlungsrichtung 11 abstrahlen. Der Trägerplatte 6 ist in Abstrahlrichtung 11 vorteilhaft ein optisches Element 8 vorgerägert, dass von der Abstrahlung der LEDs 5 durchstrahlt wird. Das optische Element 8 kann als ein in seiner Abstrahlungscharakteristik zu den Lichtleiterarmen 2, 3 vergleichbarer Lichtleiter, beispielsweise als eine Prismenplatte, ausgebildet sein, so dass über die gesamte Länge 12 der Lichtleiteranordnung 1 eine homogene Abstrahlung erreicht wird.

### Bezugszeichenliste

- 1: Lichtleiteranordnung
- 2: Lichtleiterarm
- 3: Lichtleiterarm
- 4: Zentralbereich
- 5, 5': Lichtquelle
- 6: Trägerplatte
- 7: Lichtaustrittsfläche
- 8: optisches Element
- 9, 9': Einkoppelrichtung
- 10: Prismierung
- 11: Abstrahluhgsrichtung
- 12: Länge
- 13: Länge
- 14: Länge
- 15: Länge
- 16: Abdeckscheibe

## Patentansprüche

1. Leuchte für Kraftfahrzeuge, insbesondere zusätzliche Bremsleuchte, im Wesentlichen bestehend aus einer stabförmigen Lichtleiteranordnung mit wenigstens zwei in ihrer Längsrichtung hintereinander angeordneten Lichtleiterarmen, zwischen denen mindestens eine Lichtquelle angeordnet ist, deren Licht stirnseitig in die Lichtleiterarme einkoppelbar und quer zu ihrer Längsrichtung über eine gegenüber einer reflektierenden Fläche liegenden Lichtaustrittsfläche abstrahlbar ist, bei der in einem Zentralbereich (4) zwischen den Lichtleiterarmen (2, 3) eine in der Längsrichtung der Lichtleiteranordnung (1) ausgerichtete Reihe von mehr als zwei Lichtquellen (5, 5') auf einer elektronischen Trägerplatte (6) angeordnet ist, bei der das Licht der beiden äußeren Lichtquellen (5') in die jeweiligen Stirnseiten der benachbarten Lichtleiterarme (2, 3) einkoppelbar ist, bei der das Licht wenigstens einer dazwischen liegenden Lichtquelle (5) direkt in Richtung der Lichtaustrittsfläche (7) abstrahlbar ist,
**dadurch gekennzeichnet, dass**
die äußeren Lichtquellen (5') und die inneren Lichtquellen (5) unterschiedliche Lichtstärken aufweisen.

2. Leuchte nach Anspruch 1, **dadurch gekennzeichnet, dass** der elektronischen Traegerplatte (6) in Richtung der Lichtaustrittsfläche (7) ein optisches Element (8) vorgelagert ist.

3. Leuchte nach Anspruch 2, **dadurch gekennzeichnet, dass** das vorgelagerte optische Element (8) als ein Lichtleiter ausgebildet ist.

4. Leuchte nach einem der Ansprüche 1 bis 3, **dadurch gekennzeichnet, dass** die elektronische Trägerplatte (6) als eine flexible Leiterplatte ausgebildet ist.

5. Leuchte nach einem der Ansprüche 1 bis 4, **dadurch gekennzeichnet, dass** die Lichtquellen (5, 5') als Lumineszenzdioden ausgebildet sind.

6. Leuchte nach einem der Ansprüche 1 bis 5, **dadurch gekennzeichnet, dass** Lichtleiteranordnung (1) einstückig ausgebildet ist.

7. Leuchte nach einem der Ansprüche 1 bis 6, **dadurch gekennzeichnet, dass** die Trägerplatte (6) als Kunststoff-Einspritzteil ausgebildet ist.

8. Leuchte nach einem der Ansprüche 1 bis 7, **dadurch gekennzeichnet, dass** die Lichtleiteranordnung (1) in einer Modulbauweise ausgebildet ist, und dass die einzelnen Module (2, 3, 6) über Rast- und/oder Steckverbindungen lösbar miteinander verbindbar sind.

9. Leuchte nach einem der Ansprüche 1 bis 8, **dadurch gekennzeichnet, dass** die Lichtleiteranordnung (1) drei oder mehr Lichtleiterarme (2, 3) mit jeweils dazwischen angeordneten Trägerplatten (6) aufweist, die jeweils eine Mehrzahl von Lichtquellen (5, 5') tragen, bei denen das Licht der jeweils äußeren Lichtquellen (5') in die jeweils benachbarten Stirnflächen der entsprechenden Lichtleiterarme (2, 3) einkoppelbar ist.

## Claims

1. A light for motor vehicles, more especially an additional brake light, substantially comprising a rod-shaped optical waveguide arrangement with at least two optical waveguide arms arranged one behind the other in their longitudinal direction, between which at least one light source is arranged, the light of which can be coupled at the end face into the optical waveguide arms and can be emitted transverse to their longitudinal direction over a light exit face, which is located opposite a reflective face, wherein, in a central region (4) between the optical waveguide arms (2, 3), a series of more than two light sources (5, 5') oriented in the longitudinal direction of the optical waveguide arrangement (1) is arranged on an electronic carrier plate (6), in which the light of the two outer light sources (5') can be coupled into the respective end faces of the adjacent optical waveguide arms (2, 3), in which the light of at least one light source (5) located in between can be emitted directly in the direction of the light exit face (7), **characterised in that** the outer light sources (5') and the inner light sources (5) have different light intensities.

2. A light according to claim 1, **characterised in that** an optical element (8) is arranged in front of the electronic carrier plate (6) in the direction of the light exit face (7).

3. A light according to claim 2, **characterised in that** the optical element (8) arranged in front is configured as an optical waveguide.

4. A light according to any one of claims 1 to 3, **characterised in that** the electronic carrier plate (6) is configured as a flexible printed circuit board.

5. A light according to any one of claims 1 to 4, **characterised in that** the light sources (5, 5') are configured as light emitting diodes.

6. A light according to any one of claims 1 to 5, **characterised in that** the optical waveguide arrangement (1) is configured in one piece.

7. A light according to any one of claims 1 to 6, **characterised in that** the carrier plate (6) is configured as a plastics injection moulded part.

8. A light according to any one of claims 1 to 7, **characterised in that** the optical waveguide arrangement (1) has a modular design, and **in that** the individual modules (2, 3, 6) can be releasably connected to one another by latching and/or plug connections.

9. A light according to any one of claims 1 to 8, **characterised in that** the optical waveguide arrangement (1) has three or more optical waveguide arms (2, 3) with carrier plates (6) arranged in between, in each case, which, in each case, carry a plurality of light sources (5, 5'), in which the light of the respective outer light sources (5') can be coupled into the respective adjacent end faces of the corresponding optical waveguide arms (2, 3).

## Revendications

1. Feu pour véhicule automobile en particulier feu de frein supplémentaire constitué essentiellement d'un dispositif de guide de lumière en forme de barreau avec au moins deux branches de guide de lumière montées l'une derrière l'autre en direction longitudinale, entre lesquelles est disposée au moins une source lumineuse dont la lumière peut être fournie frontalement dans les branches de guide de lumière et peut rayonner transversalement à sa direction longitudinale par une surface de sortie de la lumière située à l'opposé d'une surface réfléchissante, dans lequel dans une zone centrale (4) située entre les branches de guide de lumière (2, 3) est disposée une rangée dirigée dans la direction longitudinale du dispositif de guide de lumière (1) de plus de deux sources lumineuses (5, 5'), montées sur une plaque support électronique (6), dans lequel la lumière des deux sources lumineuses externe (5') peut être fournie dans les faces frontales respective des branches de guide de lumière (2, 3) voisines, et dans lequel la lumière d'au moins une source lumineuse (5) située entre celle-ci peut être irradiée directement en direction de la surface de sortie de la lumière (7),
**caractérisé en ce que**
les sources lumineuses externes (5') et les sources lumineuses internes (5) ont des intensité lumineuse différentes.

2. Feu conforme à la revendication 1,
**caractérisé en ce qu'**
un élément optique (8) est monté en avant de la plaque support électronique (6) en direction de la surface de sortie de la lumière (7).

3. Feu conforme à la revendication 2,
**caractérisé en ce que**
l'élément optique (8) est réalisé sous la forme d'un guide de lumière.

4. Feu conforme à l'une des revendications 1 à 3,
**caractérisé en ce que**
la plaque support électronique (6) est réalisée sous la forme d'une plaque conductrice flexible.

5. Feu conforme à l'une des revendications 1 à 4,
**caractérisé en ce que**
les sources de lumières (5, 5') sont réalisées sous la forme de diodes électroluminescentes.

6. Feu conforme à l'une des revendications 1 à 5,
**caractérisé en ce que**
le dispositif de guide de lumière (1) est réalisé en une seule pièce.

7. Feu conforme à l'une des revendications 1 à 6,
**caractérisé en ce que**
la plaque support (6) est réalisée sous la forme d'une pièce moulée par injection en matière plastique.

8. Feu conforme à l'une des revendications 1 à 7,
**caractérisé en ce que**
le dispositif de guide de lumière (1) est réalisé selon une construction modulaire et les différents modules (2, 3, 6) peuvent être reliés de manière amovible les uns aux autres par des liaisons par encliquetage et/ou par enfichage.

9. Feu conforme à l'une des revendications 1 à 8,
**caractérisé en ce que**
le dispositif de guide de lumière (1) comporte au moins trois branches de guide de lumière (2, 3) avec des plaques support (6) respectivement situées entre celles-ci qui portent respectivement plusieurs sources lumineuses (5, 5'), la lumière des sources lumineuses externes respectives (5') pouvant être fournie dans les surfaces frontales respectivement voisines des branches de guide de lumière (2, 3) correspondantes.
